# EUROPÄISCHE PATENTSCHRIFT

(11) **EP 2 371 025 B1**
(45) Veröffentlichungstag und Bekanntmachung des Hinweises auf die Patenterteilung: **07.11.2012**
(21) Anmeldenummer: 09771518.9
(22) Anmeldetag: 20.11.2009
(51) Int. Cl.: H01M 10/46, H02J 7/00

(54) **AKKUMULATOREINHEIT UND TRAGBARES ELEKTRONISCHES GERÄT**
RECHARGEABLE BATTERY UNIT AND PORTABLE ELECTRONIC APPLIANCE
ENSEMBLE ACCUMULATEUR ET APPAREIL ÉLECTRONIQUE PORTABLE

(30) Priorität: 01.12.2008 DE 102008059760; 08.04.2009 DE 102009016497
(43) Veröffentlichungstag der Anmeldung: 05.10.2011
(73) Patentinhaber: Sennheiser electronic GmbH & Co. KG, 30900 Wedemark (DE)
(72) Erfinder: REYMANN, Dirk, 29313 Hambühren (DE); SCHULZE, Elmar, 30177 Hannover (DE); NIELS CHRISTIAN, Steen, Hansen, 3550 Slangerup (DK); KRÄTZER, Dirk, 30173 Hannover (DE)
(74) Vertreter: Eisenführ, Speiser & Partner
(86) Internationale Anmeldenummer: PCT/EP2009/065557
(87) Internationale Veröffentlichungsnummer: WO 2010/063594

(56) Entgegenhaltungen:
- EP-A- 1 548 911
- EP-A- 1 610 438
- US-A1- 2006 267 547
- US-A1- 2007 037 049

## Beschreibung

Die vorliegende Erfindung betrifft eine Akkumulatoreinheit und ein tragbares elektronisches Gerät.

Tragbare elektronische Geräte brauchen für die Energieversorgung eine Batterie oder einen wiederaufladbaren Akkumulator. Hierbei sind sowohl Geräte bekannt, bei denen die Akkumulatoren aus dem elektronischen Gerät entfernt werden müssen, um aufgeladen zu werden als auch elektronische Geräte, bei denen die Akkumulatoreinheit fest in dem Gerät vorgesehen ist und der Akkumulator im eingebauten Zustand aufgeladen wird.

Es ist eine Aufgabe der vorliegenden Erfindung, eine Akkumulatoreinheit und ein tragbares elektronisches Gerät vorzusehen, welches eine einfachere Aufladung ermöglicht.

Diese Aufgabe wird durch eine Akkumulatoreinheit gemäß Anspruch 1 sowie durch ein tragbares elektronisches Gerät gemäß Anspruch 5 gelöst.

Somit wird eine Akkumulatoreinheit zum Einsetzen in ein tragbares elektronisches Gerät vorgesehen. Die Akkumulatoreinheit weist eine integrierte Ladeeinheit und eine Ladebuchse auf. Die Ladebuchse ist im eingesetzten und nicht eingesetzten Zustand frei zugänglich.

Somit kann die Akkumulatoreinheit sowohl im ausgebauten als auch im eingesetzten Zustand direkt aufgeladen werden.

Gemäß einem Aspekt der vorliegenden Erfindung stellt die Ladebuchse eine standardisierte Mikro-USB-Buchse zur Aufnahme eines Mikro-USB-Steckers dar.

Gemäß einem weiteren Aspekt der vorliegenden Erfindung ist die Akkumulatoreinheit im Wesentlichen quaderförmig ausgestaltet und weist eine Oberseite, eine Unterseite, eine erste und zweite Seitenwand, eine Vorderseite und eine Rückseite auf.

Gemäß einem weiteren Aspekt der vorliegenden Erfindung ist die Fläche der Oberseite oder der Unterseite mindestens drei Mal so groß wie die Fläche der ersten oder zweiten Seitenwand.

Somit wird eine Akkumulatoreinheit vorgesehen, welche relativ flach ausgestaltet ist und somit gut in tragbare elektronische Geräte eingefügt werden kann.

Gemäß einem weiteren Aspekt der vorliegenden Erfindung weist die Rückseite eine erste und zweite Kontaktfläche zur Bereitstellung einer elektrischen Spannung jeweils an den Enden der Rückseite auf.

Somit kann eine gute Isolierung der Kontaktflächen erreicht werden, da sie weit auseinander liegen. Ferner kann die Verschmutzungsgefahr verringert werden.

Gemäß einem weiteren Aspekt der vorliegenden Erfindung weist optional die Rückseite im Wesentlichen mittig eine Nase auf.

Somit kann eine Isolierung zwischen der ersten und zweiten Kontaktfläche verbessert werden. Ferner kann die Positionierbarkeit der Kontaktflächen weiter verbessert werden. Dies kann insbesondere dadurch erfolgen, wenn in dem elektronischen Gerät eine entsprechende Aussparung vorhanden ist. Ferner kann somit ein Wackeln der Akkumulatoreinheit in dem elektronischen Gerät vermieden werden.

Gemäß einem weiteren Aspekt der vorliegenden Erfindung weist die Akkumulatoreinheit an der Oberseite mindestens eine Nase auf, welche optional zum Einrasten der Akkumulatoreinheit in eine Aufnahmeeinheit des elektronischen Gerätes dienen kann.

Gemäß einem weiteren Aspekt der vorliegenden Erfindung weist die Vorderseite einen Vorsprung auf, welcher in einem Winkel zwischen 5° und 45° zur Rückseite angeordnet ist.

Gemäß einem weiteren Aspekt der vorliegenden Erfindung weist die Akkumulatoreinheit eine Führungsschiene an der ersten oder zweiten Seitenwand auf.

Die Erfindung betrifft den Gedanken, eine Akkumulatoreinheit mit einer integrierten Ladeelektronik und einer Ladebuchse vorzusehen. Die Ladebuchse ist sowohl im eingebauten als auch im ausgebauten Zustand unmittelbar erreichbar, so dass ein entsprechendes Ladekabel ohne weiteres angeschlossen werden kann, um den Akkumulator jederzeit (auch im eingesetzten Zustand) durch Einsetzen eines Steckers eines Ladekabels in die Ladebuchse aufzuladen. Dies ist insbesondere vorteilhaft, als kein weiteres Gerät zur Aufladung des Akkumulators benötigt wird.

Die Ausgestaltung der Ladebuchse sowie der Außendimensionen der Akkumulatoreinheit in Verbindung mit den Dimensionen der Aufnahmeeinheit sind derart gewählt, dass die Kraft, welche benötigt wird, den Stecker des Ladekabels aus der Ladebuchse zu entfernen, größer ist als die Kraft, welche benötigt wird, um die Akkumulatoreinheit in der Aufnahmeeinheit zu halten. Somit kann beispielsweise die Akkumulatoreinheit an dem Ladekabel aus dem Aufnahmefach herausgezogen werden, soweit der Stecker des Ladekabels in die Ladebuchse eingeführt ist.

Die Ladebuchse kann optional als eine standardisierte Mikro-USB-Buchse ausgestaltet sein.

Weitere Ausgestaltungen der Erfindung sind Gegenstand der Unteransprüche.

Ausführungsbeispiele und Vorteile der Erfindung werden nachstehend unter Bezugnahme auf die Zeichnung näher erläutert.
- Figur 1 A bis 1 G: zeigen verschiedene Ansichten einer Akkumulatoreinheit gemäß einem ersten Ausführungsbeispiel und
- Figur 2A bis 2C: zeigen verschiedene Ansichten eines Kopfhörers gemäß einem zweiten Ausführungsbeispiel.

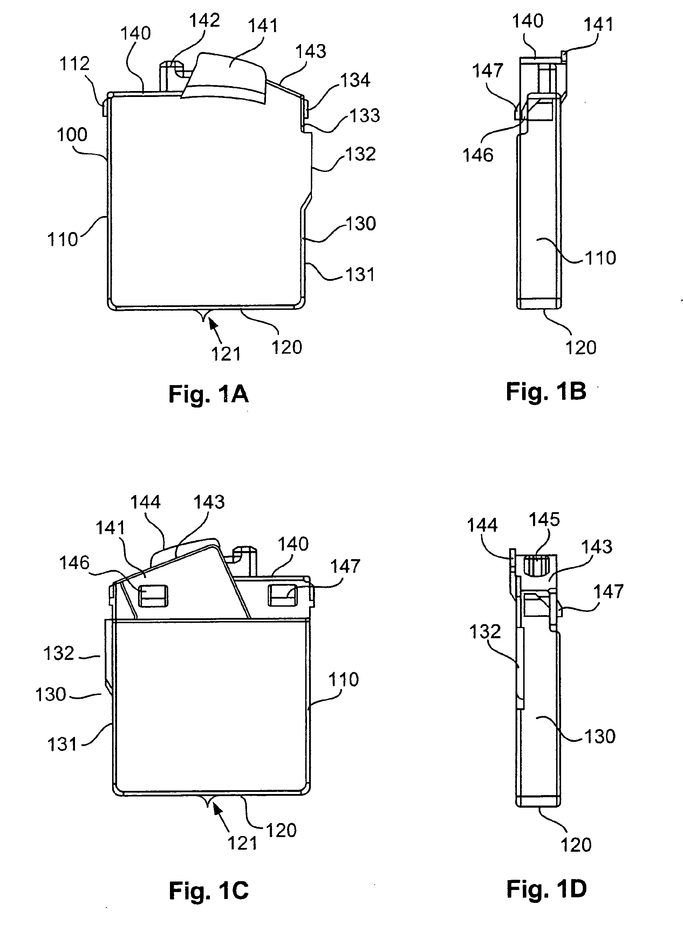

Fig. 1A bis 1G zeigen verschiedene Ansichten einer Akkumulatoreinheit für ein tragbares elektronisches und/oder elektrisches Gerät gemäß einem ersten Ausführungsbeispiel. Fig. 1A zeigt eine erste Draufsicht auf eine Akkumulatoreinheit 100 gemäß dem ersten Ausführungsbeispiel. Die Akkumulatoreinheit weist ein Gehäuse mit einer ersten und zweiten Seitenfläche 110, 130, einer Rückseite 120 und einer Vorderseite 140 auf. Die Akkumulatoreinheit kann ferner einen Energiespeicher zum Speichern elektrischer Energie aufweisen.

Die erste Seitenfläche 110 weist im Bereich des Übergangs zwischen der ersten Seitenfläche 110 und der Vorderseite 140 einen ersten Vorsprung 112 auf. Mittig im Bereich der Rückseite 120 kann eine Nase 121 optional vorgesehen werden. Die zweite Seitenfläche 130 weist einen ersten Vorsprung 132 und einen zweiten Vorsprung 134 auf. Die Vorderseite 140 weist eine schräg angeordnete erste Fläche 143 auf. In dieser ersten schräg angeordneten Fläche 134 kann eine Ladebuchse 145 vorgesehen werden. An einer Unterseite der Akkumulatoreinheit kann optional ein länglicher Vorsprung 141 vorgesehen werden.

Fig. 1B zeigt eine Seitenansicht der Akkumulatoreinheit von Fig. 1A. Die Akkumulatoreinheit weist im Bereich der Vorderseite 140 einen ersten und zweiten Vorsprung 146, 147 auf.

Fig. 1C zeigt eine Draufsicht auf eine obere Seite der Akkumulatoreinheit von Fig. 1A. Die zweite Seitenfläche 130 weist einen Vorsprung 132 auf. Im Bereich der Vorderseite 140 sind zwei Vorsprünge 146, 147 vorgesehen. Eine Fläche 141 erstreckt sich schräg bezüglich der Vorderseite 140.

Fig. 1D zeigt eine weitere Seitenansicht der Akkumulatoreinheit von Fig. 1A. An der zweiten seitlichen Fläche 130 ist ein länglicher Vorsprung 132 vorgesehen. Im Bereich der Vorderseite 140 ist ein Vorsprung 147 vorgesehen. Im Bereich der Vorderseite 140 ist ferner eine Einschuböffnung für die Ladebuchse vorgesehen.

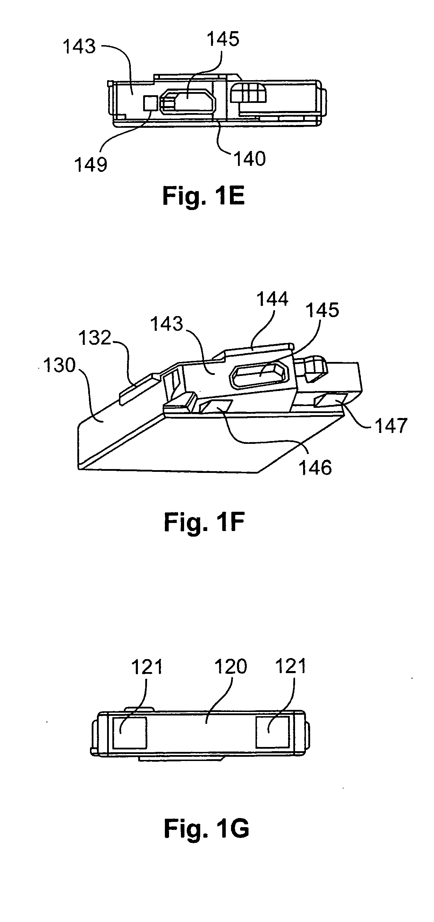

Fig. 1E zeigt eine Draufsicht auf die Vorderseite 140 der Akkumulatoreinheit von Fig. 1A. Hierbei ist die Einschuböffnung 145 zu sehen. Die Akkumulatoreinheit kann optional eine Leuchtdiode LED 149 an der Vorderseite 140 aufweisen. Die Leuchtdiode kann dazu dienen, einen Ladezustand der Akkumulatoreinheit anzuzeigen. Beispielsweise kann die Diode rot leuchten, wenn die Akkumulatoreinheit aufgeladen wird. Die Diode kann ferner grün leuchten, wenn die Akkumulatoreinheit aufgeladen ist.

Die Leuchtdiode 149 kann ebenfalls dazu verwendet werden, den Ladezustand der Diode anzuzeigen. Beispielsweise kann die Diode rot leuchten bzw. rot blinken, wenn der Ladezustand der Akkumulatoreinheit einen bestimmten Schwellwert unterschritten hat.

Fig. 1F zeigt eine perspektivische Ansicht der Akkumulatoreinheit von Fig. 1A. Hierbei ist insbesondere die Vorderseite 140 sowie die zweite Seitenfläche 130 zu sehen. An der zweiten seitlichen Fläche 130 ist ein länglicher Vorsprung 132 vorgesehen. Auf der Oberseite der Akkumulatoreinheit sind zwei Vorsprünge 146, 147 vorgesehen. An der Vorderseite 140 ist eine Einschuböffnung 154 sowie ein länglicher Vorsprung 144 vorgesehen.

Fig. 1G zeigt eine Seitenansicht der Rückseite der Akkumulatoreinheit. An der Rückseite 120 sind zwei elektronische Kontakte 121 vorgesehen.

Die Akkumulatoreinheit gemäß dem ersten Ausführungsbeispiel weist ein Gehäuse, einen Speicher zum Speichern von elektrischer Energie, eine integrierte Ladeeinheit zum Steuern der Aufladung des elektrischen Speichers sowie eine frei zugängliche Ladebuchse auf.

Die in den Fig. 1A bis 1G gezeigte Akkumulatoreinheit kann an der Rückseite 120 eine Dicke zwischen 6 und 7 mm, beispielsweise 6,25 mm und an der Vorderseite eine Dicke von beispielsweise 6,5 - 7,5, vorzugsweise 7,1 mm aufweisen. Die Länge der Akkumulatoreinheit zwischen der Rückseite 120 und dem länglichen Vorsprung 144 kann zwischen 37 - 39 mm, beispielsweise 38,2 mm betragen. Die Breite der Akkumulatoreinheit an der Rückseite 120 kann beispielsweise 29 mm betragen. Die Breite der Akkumulatoreinheit an der Vorderseite 140 kann zwischen 30 und 31, beispielsweise 30,6 mm betragen. Die erste Seitenfläche 110 kann eine Breite zwischen 28 und 30 mm, vorzugsweise 29 mm und eine Länge zwischen 25 und 27 mm, vorzugsweise 26,4 mm aufweisen.

Gemäß einem Ausführungsbeispiel der Erfindung weist die Akkumulatoreinheit ein Verhältnis der Gesamtlänge zu der Dicke der Rückseite von 6 bis 7 auf. Das Verhältnis der Gesamtlänge zu der Breite der Rückseite kann ein Verhältnis von 1 bis 1,8, vorzugsweise 1,3 aufweisen. Das Verhältnis der Breite der Rückseite 120 zu der Dicke der Rückseite kann zwischen 4 und 5 und vorzugsweise 4,6 betragen.

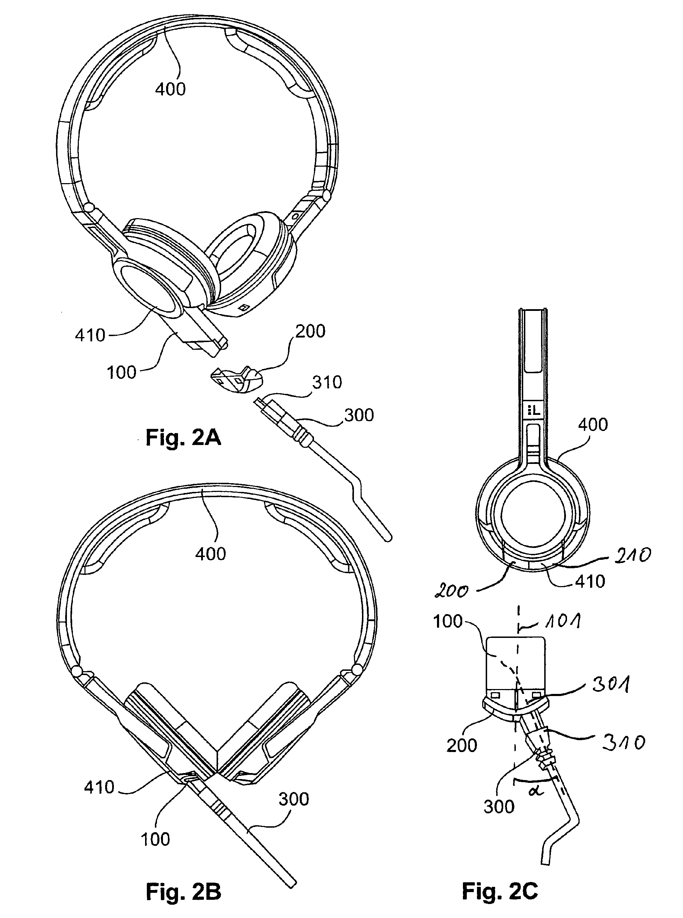

Fig. 2A bis 2C zeigen verschiedene Ansichten eines Kopfhörers gemäß einem zweiten Ausführungsbeispiel.

Fig. 2A zeigt eine schematische Ansicht eines Kopfhörers 400 gemäß einem zweiten Ausführungsbeispiel, eine Akkumulatoreinheit 100 beispielsweise gemäß dem ersten Ausführungsbeispiel, eine Kappe 200 sowie ein Ladekabel 300. Die Akkumulatoreinheit kann in ein Aufnahmefach 410 des Kopfhörers eingeschoben werden, so dass die elektrischen Anschlüsse 121 an der Rückseite 120 der Akkumulatoreinheit mit entsprechenden elektrischen Anschlüssen in dem Kopfhörer gekoppelt werden. Anschließend kann eine Kappe 200 über die Vorderseite der Akkumulatoreinheit geschoben werden, so dass die Akkumulatoreinheit im eingeschobenen Zustand verdeckt ist und lediglich eine Ladebuchse frei zugänglich ist, so dass ein Ladekabel 300 beispielsweise mit einem Mikro-USB-Anschluss bzw. Stecker in die Ladebuchse eingeschoben werden kann.

Fig. 2B zeigt eine schematische Ansicht des Kopfhörers gemäß dem zweiten Ausführungsbeispiel, wobei sowohl die Akkumulatoreinheit 100 in dem Gehäuse des Kopfhörers aufgenommen ist und die Akkumulatoreinheit 100 mit einem Ladekabel 300 gekoppelt ist.

Fig. 2C zeigt eine seitliche Ansicht eines Kopfhörers gemäß dem zweiten Ausführungsbeispiel und einer Akkumulatoreinheit 100 mit der Kappe 200 und dem Ladekabel 300. Hierbei kann die Akkumulatoreinheit in die Öffnung 410 in dem Gehäuse des Kopfhörers eingeschoben werden.

Das Aufnahmefach 410 kann eine Nut zur Aufnahme des länglichen Vorsprungs 132 aufweisen. Das Aufnahmefach 410 kann ferner Ausnehmungen zur Aufnahme der Vorsprünge 146, 147 aufweisen.

Die in den Fig. 1A bis 1G gezeigte Akkumulatoreinheit kann ebenfalls in anderen tragbaren elektronischen Geräten verwendet werden.

Die Akkumulatoreinheit gemäß der Erfindung kann einen Lithium-Polymerakkumulator mit integrierter Ladeelektronik darstellen.

Die oben beschriebene Akkumulatoreinheit kann beispielsweise über ein USB-Ladekabel angeschlossen werden. Hierbei ist die Kraft, welche das USB-Kabel bzw. den Stecker des USB-Kabels in der Akkumulatoreinheit hält, größer als die Kraft, mit der die Akkumulatoreinheit in dem Aufnahmefach des Hörers gehalten wird. Hierbei kann beispielsweise die Kraft, mit der das USB-Kabel gezogen werden muss, um die Akkumulatoreinheit aus der Aufnahmeeinheit zu entfernen, beispielsweise zwischen 14 N und 18 N und insbesondere 14,9 N und 17,5 N liegen. Die Kraft, mit der der USB-Stecker aus der Akkumulatoreinheit gezogen wird, liegt im Bereich von 19 N bis 25 N und insbesondere zwischen 21 N und 22 N.

Durch die oben beschriebene Ausgestaltung der Akkumulatoreinheit und der Aufnahmeeinheit des Hörers kann die Akkumulatoreinheit auf einfache Art und Weise lediglich durch Ziehen an dem eingesteckten USB-Kabel aus dem Aufnahmefach entfernt werden. Dies ermöglicht eine einfache Auswechslung der Akkumulatoreinheit.

Mit anderen Worten, die Verbindungskraft zwischen dem USB-Kabel und der Akkumulatoreinheit ist größer als die Verbindungskraft zwischen der Akkumulatoreinheit und dem Gehäuse des Hörers.

Vorzugsweise kann die Buchse zur Aufnahme des USB-Kabels mit einer Abdeckung versehen werden.

Die Verbindung zwischen dem USB-Stecker und der Akkumulatoreinheit sowie zwischen der Akkumulatoreinheit und dem Gehäuse des Hörers kann beispielsweise mittels einer Reibverbindung anstatt einer Rastverbindung ermöglicht werden.

In Fig. 2C ist eine Akkumulatoreinheit 100 mit einer Kappe 200 und einem eingeführten Ladekabel gezeigt. Die Akkumulatoreinheit 100 weist eine Mittellinie 101 auf. Der Stecker 310 weist ebenfalls eine Mittellinie 301 auf. Wenn der Stecker in die Buchse 145 der Akkumulatoreinheit 100 eingeführt ist, dann bilden die Mittellinie 101 der Akkumulatoreinheit und die Mittelinie 301 des Steckers des Ladekabels einen Winkel α. Die schräge Ausgestaltung der Buchse 145 ist ferner vorteilhaft, um die Akkumulatoreinheit mittels des Ladekabels aus dem Aufnahmefach 410 für die Akkumulatoreinheit herauszuziehen. Die Kappe 200 weist eine verschwenkbare Abdeckung 210 für die Ladebuchse 145 auf. Somit kann die Ladebuchse verschlossen und geschützt werden, wenn das Ladekabel nicht an der Ladebuchse angeschlossen ist.

Obwohl in den Fig. 2A bis 2C lediglich ein Aufnahmefach 410 für die Akkumulatoreinheit auf einer Seite des Hörers gezeigt ist, kann der Hörer ebenfalls dazu ausgestaltet sein, auf beiden Seiten jeweils ein Aufnahmefach 410 aufzunehmen. So kann beispielsweise gewährleistet sein, dass ein Ersatzakku in der zweiten Aufnahmeeinheit vorhanden ist.

Durch die schräge Ausgestaltung der Mikrofonbuchse 145 kann die in Fig. 2C gezeigte Situation erreicht werden, dass die Mittellinie 101 der Akkumulatoreinheit in einem Winkel α zu der Mittellinie 310 des Steckers des Ladekabels ausgestaltet ist.

Obwohl in den obigen Ausführungsbeispielen beschrieben wurde, dass die Akkumulatoreinheit und die Kappe 200 als zwei getrennte Teile ausgestaltet sind, kann die Akkumulatoreinheit mit einer festen Kappe 200 vorgesehen werden.

## Patentansprüche

1. Akkumulatoreinheit zum Einsetzen in ein tragbares elektronisches Gerät, mit
einem Gehäuse,
einer integrierten Ladeeinheit;
einer frei zugänglichen Ladebuchse (145), wobei
das Gehäuse der Akkumulatoreinheit im Wesentlichen quaderförmig ausgestaltet ist und eine Oberseite, eine Unterseite, eine erste Seitenwand (110), eine zweite Seitenwand (130), eine Vorderseite (140) und eine Rückseite (120) aufweist, wobei
die Fläche der Oberseite und der Unterseite jeweils wenigstens 3 mal so groß wie die Fläche der ersten oder zweiten Seitenwand (110, 120), der linken Seitenwand und/oder der Rückseite ist, wobei
die Rückseite (120) eine erste Kontaktfläche und eine zweite Kontaktfläche (121) zur Bereitstellung einer elektrischen Spannung jeweils an den Enden der Rückseite (120) aufweist, wobei
die Vorderseite (140) einen Vorsprung (141) mit einer Wand aufweist, die in einem Winkel zwischen 5 und 45 Grad zur Rückseite (120) angeordnet ist, und
einem länglichen Vorsprung (132) zumindest teilweise entlang der ersten oder zweiten Seitenwand, insbesondere in der vorderen Hälfte der Akkumulatoreinheit,
wobei die Ladebuchse (145) an der Vorderseite (140) vorgesehen ist.

2. Akkumulatoreinheit nach Anspruch 1, wobei
die Ladebuchse (145) eine standardisierte Mikro-USB-Buchse darstellt.

3. Akkumulatoreinheit nach Anspruch 1, wobei
die Rückseite (120) mittig eine Nase (121) aufweist.

4. Akkumulatoreinheit nach einem der Ansprüche 1 bis 3, wobei
die Oberseite wenigstens eine Nase aufweist, die zum Einrasten der Akkumulatoreinheit in einer Aufnahmeeinheit dient.

5. Tragbares elektronisches Gerät, mit
einem Aufnahmefach (410) zur Aufnahme einer Akkumulatoreinheit gemäß einem der Ansprüche 1 bis 4, und
einer Akkumulatoreinheit gemäß einem der Ansprüche 1 bis 4.

6. Tragbares elektronisches Gerät nach Anspruch 5, wobei
das Aufnahmefach (410) elektrische Anschlüsse aufweist, welche mit elektrischen Anschlüssen (121) zusammenwirken können, wenn die Akkumulatoreinheit in das Aufnahmefach eingeführt wird.

7. Tragbares elektronisches Gerät nach einem der Ansprüche 5 oder 6, wobei das Aufnahmefach (410) und die Akkumulatoreinheit (100) derart ausgestaltet ist, dass die Reibwirkung zwischen dem Aufnahmefach (410) und der Akkumulatoreinheit (100) kleiner ist als die Reibwirkung zwischen einem Stecker (310) eines Ladekabels (300) und der Ladebuchse (145).

8. Tragbares elektronisches Gerät nach Anspruch 5 oder 6, wobei die Haltekraft zwischen dem Aufnahmefach (140) und der Akkumulatoreinheit (100) kleiner ist als die Haltekraft zwischen einem Stecker (310) eines Ladekabels (300) und der Ladebuchse (145).

## Claims

1. A rechargeable battery unit for insertion into a portable electronic device, comprising
a housing,
an integrated charging unit,
a freely accessible charging socket (145), wherein
the housing of the rechargeable battery unit is of a substantially cuboidal configuration and has a top side, an underside, a first side wall (110), a second side wall (130), a front side (140) and a rear side (120), wherein
the surface area of the top side and the underside is in each case at least three times as great as the surface area of the first or second side wall (110, 120), the left-hand side wall and/or the rear side, wherein
the rear side (120) has a first contact surface and a second contact surface (121) for providing a voltage In each case at the ends of the rear side (120), wherein
the front side (140) has a projection (141) with a wall disposed at an angle of from 5 to 45 degrees to the rear side (120), and
an elongate projection (132) at least partially along the first or second side wall, especially in the front half of the rechargeable battery unit,
wherein the charging socket (145) is provided at the front side (140).

2. A rechargeable battery unit according to claim 1, wherein
the charging socket (145) represents a standardised micro-USB socket.

3. A rechargeable battery unit according to claim 1, wherein
the rear side (120) centrally has a nose (121).

4. A rechargeable battery unit according to any one of claims 1 to 3, wherein
the top side has at least one nose which serves for latching engagement of the rechargeable battery unit in a receiving unit.

5. A portable electronic device comprising
a receiving compartment (420) for receiving a rechargeable battery unit according to any one of claims 1 to 4, and
a rechargeable battery unit according to any one of claims 1 to 4.

6. A portable electronic device according to claim 5, wherein
the receiving compartment (410) has electrical connections which are able to cooperate with electrical connections (121) when the rechargeable battery unit is inserted into the receiving compartment.

7. A portable electronic device according to either of claims 5 and 6, wherein the receiving compartment (410) and the rechargeable battery unit (100) are of a configuration such that the frictional effect between the receiving compartment (410) and the rechargeable battery unit (100) is smaller than the frictional effect between a plug (310) of a charging cable (300) and the charging socket (146).

8. A portable electronic device according to claim 5 or 6, wherein the holding force between the receiving compartment (140) and the rechargeable battery unit (100) is smaller than the holding force between a plug (310) of a charging cable (300) and the charging socket (145).

## Revendications

1. Ensemble accumulateur destiné à être ingéré dans un appareil électronique portable, comprenant :
un boîtier,
une unité de charge intégrée ;
une douille de charge librement accessible (145),
dans lequel le boîtier de l'ensemble accumulateur présente une forme sensiblement parallélépipédique et comporte une face supérieure, une face inférieure, une première paroi latérale (110), une deuxième paroi latérale (130), une face avant (140) et une face arrière (120),
dans lequel la surface de la face supérieure et de la face inférieure sont chacune au moins 3 fois aussi grande que la surface de la première ou de la deuxième paroi latérale (110, 120), de la paroi latérale gauche et/ou de la face arrière,
dans lequel la face arrière (120) comporte une première surface de contact et une deuxième surface de contact (121) destinées à la fourniture d'une tension électrique à chacune des extrémités de la face arrière (120),
dans lequel la face avant (140) comporte une partie en saillie (141) avec une paroi qui est disposée selon un angle entre 5 et 45 degrés par rapport à la face arrière (120), et
une partie en saillie allongée (132) au moins partiellement le long de la première ou de la deuxième paroi latérale, en particulier dans la moitié avant de l'ensemble accumulateur,
dans lequel la douille de charge (145) est disposée sur la face avant (140).

2. Ensemble accumulateur selon la revendication 1, la douille de charge (145) représente une douille micro USB standardisée.

3. Ensemble accumulateur selon la revendication 1, dans lequel la face arrière (120) comporte un taquet (121) en son milieu.

4. Ensemble accumulateur selon l'une quelconque des revendications 1 à 3,
dans lequel la face supérieure comporte au moins un taquet qui sert à encliqueter l'ensemble accumulateur dans une unité de réception.

5. Appareil électronique portable, comportant
un compartiment de réception (410) servant à recevoir un ensemble accumulateur selon l'une des revendications 1 à 4, et
un ensemble accumulateur selon l'une des revendications 1 à 4.

6. Appareil électronique portable selon la revendication 5,
dans lequel le compartiment de réception (410) comporte des branchements électriques qui peuvent entrer en interaction avec des branchements électriques (121) lorsque l'ensemble accumulateur est inséré dans le compartiment de réception.

7. Appareil électronique portable selon l'une quelconque des revendications 5 ou 6, dans lequel le compartiment de réception (410) et l'ensemble accumulateur (100) sont agencés de manière telle que l'effet de flottement entre le compartiment de réception (410) et l'ensemble accumulateur (100) soit inférieur à l'effet de flottement entre un connecter (310) d'un câble de charge (300) et la douille de charge (145).

8. Appareil électronique portable selon la revendication 5 ou 6, dans lequel la force de rétention entre le compartiment de réception (140) et l'ensemble accumulateur (100) est inférieure à la force de rétention entre un connecteur (310) d'un câble de charge (300) et la douille de charge (145).
